# EUROPEAN PATENT SPECIFICATION

(11) **EP 2 045 191 B1**
(45) Date of publication and mention of the grant of the patent: **07.05.2014**
(21) Application number: 07790901.8
(22) Date of filing: 18.07.2007
(51) Int. Cl.: B65D 33/25, A44B 19/16, B65D 33/00, B31B 19/90

(54) **PACKAGING BAG WITH FASTENER TAPE**
VERPACKUNGSBEUTEL MIT BEFESTIGUNGSBAND
SAC D'EMBALLAGE AVEC BANDE DE FIXATION

(30) Priority: 19.07.2006 JP 2006197500
(43) Date of publication of application: 08.04.2009
(73) Proprietor: Idemitsu Unitech Co. Ltd., Tokyo, 1040033 (JP)
(72) Inventor: KATADA, Ryo, Sodegaura-shi Chiba 299-0205 (JP); TANAKA, Kenichi, Sodegaura-shi Chiba 299-0205 (JP)
(74) Representative: Skone James, Robert Edmund
(86) International application number: PCT/JP2007/064146
(87) International publication number: WO 2008/010505

(56) References cited:
- WO-A2-2004/050487
- JP-A- 2003 103 660
- JP-A- 2005 040 630
- JP-A- 2006 111 277

## Description

### Technical Field

The present invention relates to a package bag having a recloseable zipper tape.

### Background Art

A package bag having a zipper tape, in which a zipper tape formed as a pair of belts is provided, is used as a package bag for packaging goods such as food, medicine, medical goods, and miscellaneous goods. Here, the zipper tape is disposed at an opening of the bag and includes a male member and a female member that reclosably engage with each other.

In addition, Patent Document 1 discloses a method for heat-sealing at a position closer to a content than a zipper tape in order to secure air-tightness and water-tightness of an inside of the package bag.

According to Patent Document 1, one of the pair of tape portions of the zipper tape that are attached to facing inner surfaces of films is widened toward a content side. A portion of the widened portion forms a thin portion.
The widened portion is sealed on one of the facing inner surfaces of the package bag at a position closer to a content than the thin portion, thus hermetically closing the package bag. The package bag is opened by cutting the thin portion with a force that opens the zipper tape

Patent Document 1: WO2004/050487 A2

### Disclosure of the Invention

### Problems to Be Solved by the Invention

However, according to Patent Document 1, cuttability (cutting property) depends on a seal position thereof on the facing films and a seal shape, so that it is difficult to obtain stable cutting property.

An object of the invention is to provide a package bag having zipper tape, the bag possessing an openability that is independent of seal conditions and a thin portion that can be easily cut with a force for opening the zipper tape.

### Means for Solving the Problems

A bag having a zipper tape according to an aspect of the invention is a bag having a zipper tape, the zipper tape being attached to mutually facing inner surfaces of a bag body, the zipper tape including: an engagement portion formed when a pair of male member and a female member are engaged; and belt-like bases respectively continued to the male member and the female member, in which one of the belt-like bases is widened toward a content side relative to the other of the belt-like bases in order to define a seal base, a first surface of the seal base in side of the engagement portion is attached to one of the mutually facing inner surfaces of the bag body, a second surface of the seal base in opposite side of the engagement portion is not appreciably attached to the other of the mutually facing inner surfaces of the bag body, the seal base includes a linear portion provided substantially in parallel to a longitudinal direction of the engagement portion and adapted to be cut, a content-side edge of the linear portion is abutted to or proximate to an opening-side end of a seal portion provided to a content side of the linear portion, and a dimension between the seal portion and the linear portion changes along a longitudinal direction of the linear portion.

With the aspect of the invention, because the seal base includes the linear portion adapted to be cut, when the package bag having the zipper tape is opened, a force that opens the engagement portion of the zipper tape can cut the linear portion.

In addition, because the linear portion is abutted to or proximate to the seal portion, when the zipper tape is opened, the facing surfaces of the bag body bend in opening directions at a position of the linear portion. Accordingly, the force is applied to the vicinity of the linear portion, so that cutting is easily conducted at the position of the linear portion with stability. Incidentally, it is more preferable that the linear portion is abutted to the seal portion because the facing surfaces of the bag body reliably bend at the position of the linear portion.

Furthermore, because the dimension between the seal portion and the linear portion changes along the longitudinal direction of the linear portion, when the zipper tape is opened, stress is concentrated at a position where the dimension between the seal portion and the linear portion is the smallest. Since the seal portion and the linear portion are abutted to or proximate to each other, the stress is applied to the vicinity of the linear portion, so that cutting is likely to occur at the position of the linear portion.

In the above arrangement, it is preferable that the distance between the content-side edge of the linear portion and the opening-side end of the seal portion is 3 mm or smaller.

If the distance between the content-side edge of the linear portion and the opening-side end of the seal portion is larger than 3 mm, when the zipper tape is opened, bending does not occur at the position of the linear portion, thus making the cutting unlikely to occur.

In the above arrangement, it is preferable that the seal portion is shaped to provide one or more protrusions or one or more wave-shaped portions.

In this shape of the seal portion, because a plurality of protrusions protruding toward the linear portion are formed, when the zipper tape is opened, regardless of the opening position, stress is concentrated to a vertex (opening-side end) of one of the protrusions of the seal portion. Since the content-side edge of the linear portion is abutted to or proximate to the vertex of the protrusion, stress is applied to the vicinity of the linear portion, so that the linear portion becomes more likely to be cut.

In the above arrangement, it is preferable that a distance between the engagement portion and the linear portion in the one of the belt-like bases that includes the seal base is the same as a distance between the engagement portion and a content-side end of the other of the belt-like bases in the other of the belt-like bases.

With this arrangement, because the length from the engagement portion to the linear portion in the belt-like base including the seal base is the same as the length from the engagement portion to the content-side end in the belt-like base not including the seal base, when the seal base and one of the facing inner surfaces of the package bag are contacted entirely face to face in a manner simulating sealing, the content-side end of the belt-like base not including the seal base reaches the position of the linear portion.

Accordingly, if the entire seal base including the seal portion and the linear portion is sealed by the seal bar, at an area closer to the opening than the linear portion, the seal base and one of the facing inner surfaces of the package bag are not sealed because of the facing belt-like base. On the other hand, at an area closer to the content than the linear portion, the seal base and one of the facing inner surfaces of the package bag are sealed. Furthermore, because an area to the content-side edge of the linear portion can be securely sealed, a greater effect can be obtained with regard to the cutting property of the linear portion.

In the above arrangement, it is preferable that a fusing point of the seal portion is lower than a fusing point of the seal base except the seal portion.

With this arrangement, because the fusing point of the material forming the seal portion is lower than the fusing point of the material forming the seal base except the seal portion, by adjusting the sealing temperature of the seal bar, only the seal portion having the low fusing point can be sealed. Accordingly, because the area to the content-side edge of the linear portion can be securely sealed, a greater effect can be obtained with regard to the cutting property of the linear portion.

In the above arrangement, it is preferable that the linear portion is thinner than a portion adjacent to the linear portion.

With this arrangement, because the linear portion is formed thinner than neighboring portions, when the zipper tape is opened, bending occurs in an opening direction of the bag body at a position of the linear portion, so that force is likely to be applied to the linear portion. Therefore, cutting can be reliably conducted at the position of the linear portion.

In the above arrangement, it is preferable that the linear portion is formed of a resin that has a small compatibility with the seal base except the linear portion.

With this arrangement, the resin used for the linear portion is different from the resin used for portions other than the linear portion, and in addition, the resins have small compatibility with each other, so that the connecting portion of the resins is likely to be cut. Therefore, with the force that opens the zipper tape, the connecting surface of the linear portion and the seal portion are easily cut.

### Brief Description of Drawings

Fig. 1 is a front view showing a package bag having a zipper tape according to a first embodiment of the invention.
Fig. 2 is a perspective view showing the package bag having the zipper tape of Fig. 1.
Fig. 3 is a cross-sectional view taken along III-III line of Fig. 1, showing an engaged state of a male member and a female member.
Fig. 4 is a cross-sectional view showing the zipper tape employed in the first embodiment.
Fig. 5 is a cross-sectional view showing the package bag having the zipper tape of the first embodiment being sealed.
Fig. 6 is a plan view showing a shape of a seal bar employed in the first embodiment.
Fig. 7 is a cross-sectional view showing an engagement portion of the zipper tape of Fig. 3 having been disengaged.
Fig. 8 is a cross-sectional view showing a linear portion of Fig. 4 being cut to open the bag.
Fig. 9 is a cross-sectional view showing a zipper tape employed in a second embodiment.
Fig. 10 is a cross-sectional view showing a package bag having the zipper tape of the second embodiment being sealed.
Fig. 11 is a plan view showing a shape of a seal bar employed in the second embodiment.
Fig. 12 is a cross-sectional view showing a zipper tape employed in a third embodiment.
Fig. 13 is a cross-sectional view showing the zipper tape of Fig. 12 having been cut.

### Explanation of Codes

1... package bag having zipper tape
2...bag
23...opening
3 ... zipper tape
31...engagement portion
32...male member
33...female member
321, 331...belt-like base
35 linear portion
36...seal base
4... seal portion

### Best Mode for Carrying Out the Invention

Embodiments of the invention will be described below with reference to the drawings. In description of the embodiments, description of members denoted with like numerals is omitted or simplified.

### First Embodiment

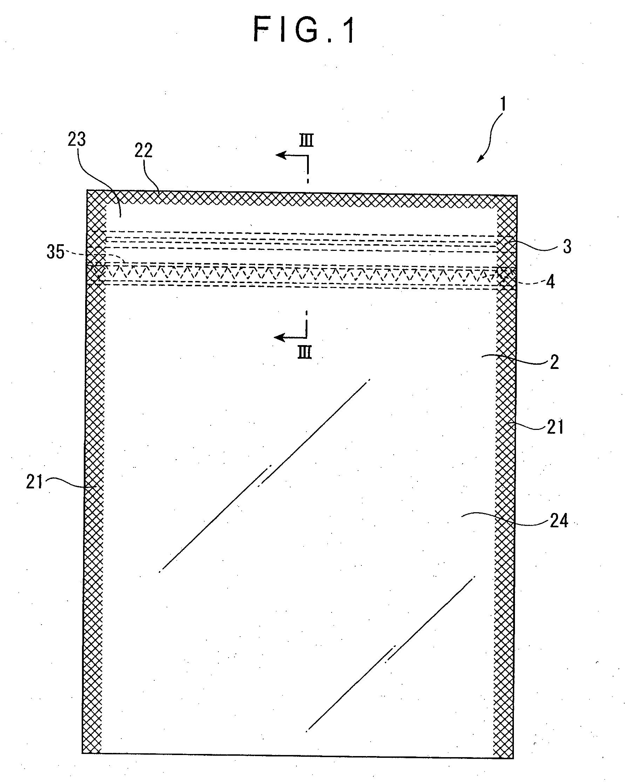

A first embodiment of the invention will be initially described with reference to Figs. 1 to 3.

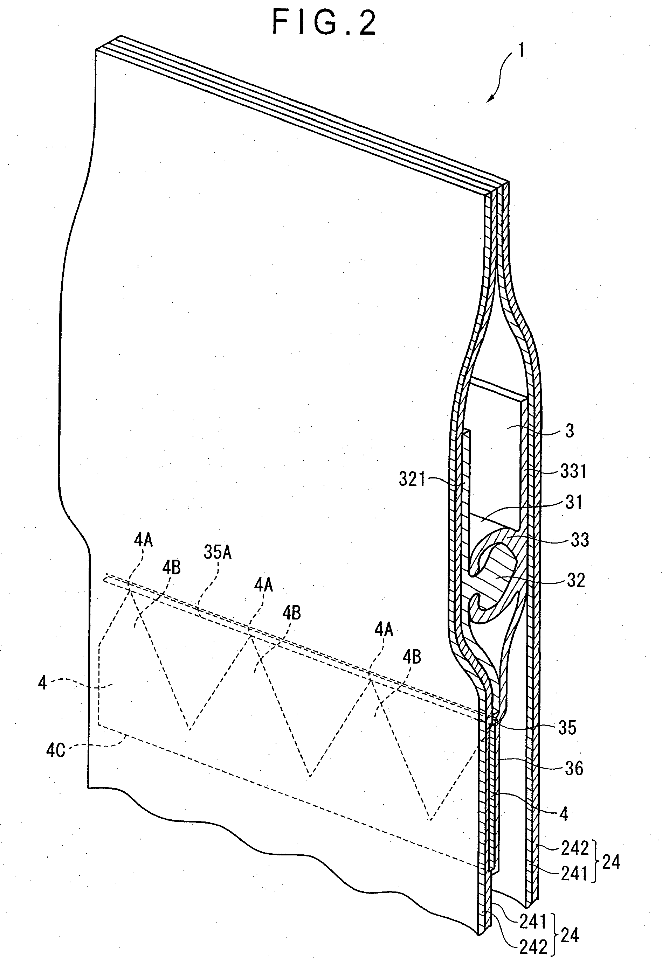

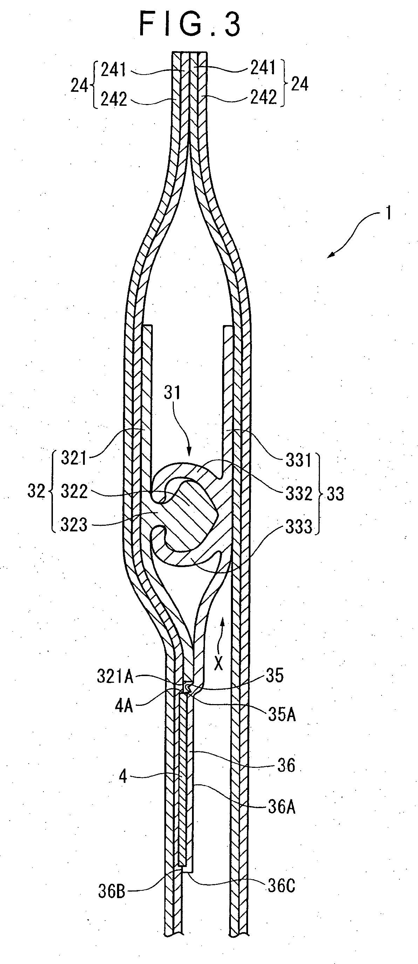

Fig. 1 is a front view showing a package bag 1 having a zipper tape (hereinafter referred to as the zipper-equipped package bag 1) according to the first embodiment of the invention. Fig. 2 is a perspective view of Fig. 1. Fig. 3 is a cross-sectional view taken along III-III line in Fig. 1, and shows a cross-section of the zipper tape in which an engagement portion in engagement is sealed on a bag body that forms the package bag.

As shown in Fig. 1, a zipper-equipped package bag 1 includes a bag body 2 formed by positioning base films 24 (packaging material) closely face to face and forming a side seal portion 21 and a top seal portion 22 on a periphery of the base films 24.

A zipper tape 3 is attached on an inner surface of the opening 23 of the bag body 2. The zipper tape 3 includes a pair of a male member 32 and a female member 33 (Fig. 2).

A cross-sectional arrangement of the zipper tape 3 is shown in Fig. 3. As illustrated, the male member 32 integrally includes: a belt-like base 321 fused on the bag body 2; a head 322 having a substantially arrowhead-shaped cross section; and a connector 323 connecting the belt-like base 321 and the head 322. Similarly to the male member 32 noted above, the female member 33 includes: a belt-like base 331; and a first hook 332 and a second hook 333 which face each other, have arc-shaped cross-sections, and are connected to the belt-like base 331.

In the zipper tape 3, the head 322 of the male member 32 and the first hook 332 and the second hook 333 of the female member 33, which form an engagement portion 31, engage and disengage to perform an opening action and a reclosing action.

Incidentally, after a content (not shown) is inserted from a bottom direction of the bag body 2, a bottom side of the bag body 2 is sealed to hermetically close the zipper-equipped package bag 1.

The belt-like base 331 integrated with the female member 33 is widened toward a content side of the bag body 2 (downward in Figs. 1 and 3) relative to the belt-like base 321 integrated with the male member 32. The seal base 36 includes a wedge-shaped linear portion 35 thinly formed in parallel to a longitudinal direction of the engagement portion 31.

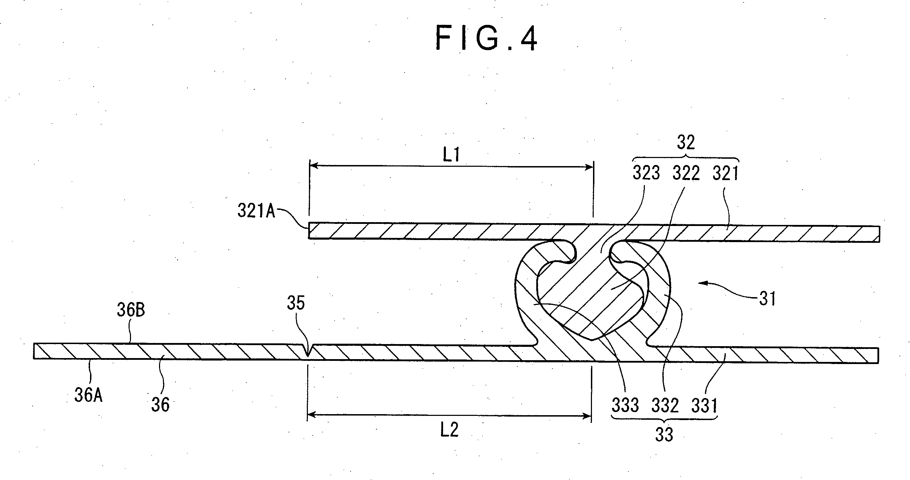

Fig. 4 is a cross-sectional view of the zipper tape 3. A length L2 from the linear portion 35 to the engagement portion 31 in the belt-like base 331 is equal to a length L1 from a content-side end 321A to the engagement portion 31 in the belt-like base 321.

Sides of the belt-like bases 321 and 331 opposite to the engagement portion 31 are respectively sealed to facing inner surface of the bag body 2 to fix the zipper tape 3 to the bag body 2.

A surface 36A of the seal base 36 formed in the belt-like base 331 in opposite side of the engagement portion 31 is not appreciably fused to facing inner surface of the bag body 2. On the other hand, a surface 36B of the seal base 36 in side of the engagement portion 31 is sealed on facing inner surface of the bag body 2 to form a seal portion 4.

The seal portion 4 preferably is formed closer to the content than the linear portion 35 to provide two or more protrusions or two or more wave-shaped portions. In the embodiment, as shown in Figs. 1 and 2, a plurality of triangular portions 4B respectively having a vertex in a side of the linear portion 35 and a straight linear portion 4C at a bottom side of the triangular portion 4B are integrally formed.

The vertex of the triangular portion 4B is an opening-side end 4A of the seal portion 4. A distance between the opening-side end 4A and the content-side edge 35A of the linear portion 35 preferably is equal to or less than 3 mm. In the embodiment, the content-side edge 35A of the linear portion 35 and the opening-side end 4A of the seal portion 4 are in contact with each other.

Incidentally, as described below, the seal portion 4 is formed by pressing with a seal bar 5 in a heated state. A pressing surface of the seal bar 5 includes a pressing protrusion 5A having the same shape as the seal portion 4 formed continuously along a longitudinal direction.

Here, with regard to the male member 32 that forms the zipper tape 3, the belt-like base 321 and the head 322 and the connector 323 that are continued from the belt-like base 321 can be integrally coextruded. Similarly, with regard to the female member 33, the belt-like base 331 and the first hook 332 and the second hook 333 that are continued from the belt-like base 331 can be integrally coextruded. By molding the zipper tape 3 by this coextrusion method, manufacturing process can be simplified, manufacturing cost can be reduced, and the zipper tape 3 can be consecutively manufactured with stability.

The male member 32 and the female member 33 of the zipper tape 3 are made of polypropylene. Specifically, a thermoplastic resin such as homopolypropylene, block polypropylene, random polypropylene (RPP), propylene-ethylene-butene-1 random ternary copolymer, polyolefinic specialty soft resin (a TPO resin, e.g., a prime polymer TPO) or the like or a mixture of these resins may be employed.

Incidentally, when random polypropylene (RPP) is used as a resin that forms the zipper tape 3, a melt flow rate (MFR) of the RPP preferably is in the range of 0.5 to 20 g/10min and further preferably is in the range of 1 to 15 g/10min. If the MFR of the random polypropylene is smaller than 0.5 g/10min, the engagement portion 31 formed continuously and integrally with the belt-like bases 321 and 331 may be poorly extruded. On the other hand, if the MFR is greater than 20 g/10min, distal ends of the first and the second hooks 332 and 333 may close, or the connector 323 of the male member 32 may be collapsed, thereby hindering extrusion in a shape predetermined to provide a recloseable zipper tape.

The zipper-equipped package bag 1 shown in Fig. 1 is obtained by fusing the zipper tape 3 having such an arrangement on the base films 24 that form the bag body 2 and making the base films 24 into a bag.

Here, the base film 24 which is a packaging material that forms the bag body 2 preferably is a laminated film formed by a base layer 242 and a sealant layer 241 laminated on the base layer 242. However, depending on required performances, lamination of films including a gas barrier layer, a light blocking layer, a strength improving layer, and the like (not shown) may be provided as an intermediate layer between the base layer 242 and the sealant layer 241.

The base layer 242 may be formed of a biaxially oriented polypropylene film (OPP film) as well as of a biaxially oriented polyester film such as a biaxially oriented polyethylene terephthalate film (PET film), a biaxially oriented polyethylenenaphthalate film (PEN film) or a biaxially oriented polyamide film such as nylon 6, nylon 66, MXD 6 (polymethaxylylene adipamide). In addition, various engineering plastic films may be employed as necessary. One of these films may be employed alone, or a lamination of a plurality of the films may be employed.

When the intermediate layer is the gas barrier layer, examples of a suitable material of the intermediate layer include a film of saponified ethylene-vinyl-acetate copolymer (EVOH), polyvinylidene chloride (PVDC), polyacrylonitrile (PAN) or the like, an aluminum foil, a deposited layer of silica, alumina, aluminum or the like, and a coated film of PVDC.

When the deposited layer of silica, alumina, aluminum or the like or the coated film of PVDC is employed, the deposition or the coating may be conducted on the inner surface of the base layer 242, or the deposition or the coating may be conducted in advance on a separate biaxially oriented nylon film (ONy film), a separate biaxially oriented polyethyleneterephthalate film (PET film), a separate biaxially oriented polypropylene film (OPP film) or the like before the films are laminated to form the intermediate layer.

Being opaque, the aluminum foil and the aluminum deposition layer can serve as the light blocking layer.

The base layer 242 and the films in the intermediate layer can be laminated by a known dry lamination method or a known extrusion lamination method (sandwich lamination method).

The sealant layer 241 which is the innermost layer may be made of polypropylene (CPP) or the like.

Incidentally, the sealant layer 241 may be laminated as follows: the above-mentioned resin is formed into a film, which is laminated by the dry lamination method or the extrusion lamination method; or the above-mentioned resin may be laminated by extrusion coating.

Furthermore, the zipper-equipped package bag 1 may be easily manufactured by, for example, a three-side-seal bag-making machine having a zipper-tape sealing unit.

After the zipper tape 3 with the engagement portion 31 being engaged is fused on the inner surface of the bag body 2, sealing is conducted by a pair of seal bars 5 disposed facing each other across the seal base 36 of the zipper-equipped package bag 1.

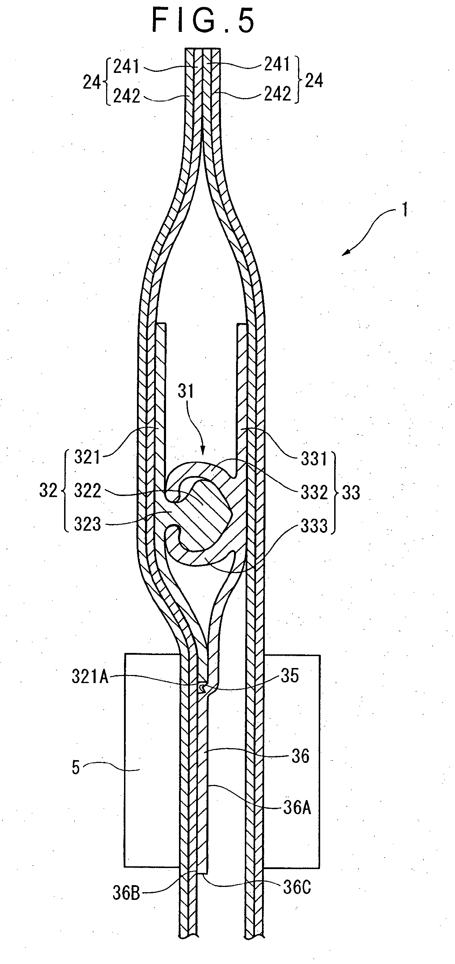

The seal bars 5 are capable of moving toward and away from each other. When the seal bars 5 are apart from each other, the zipper-equipped package bag 1 is held at a predetermined position. At this time, depending on the shape of the seal portion 4, the seal bar 5 is disposed at a position partially including the seal base 36, the linear portion 35, and the belt-like base 321 (Fig. 5) or at a position where the opening-side end 4A of the seal portion 4 abuts to the content-side edge 35A of the linear portion 35. In the embodiment, since the triangular portion 4B of the seal portion 4 has a vertex (the opening-side end 4A), the seal bars 5 are disposed at a position where the opening-side end 4A abuts to the content-side edge 35A of the linear portion 35.

If the seal portion 4 is shaped in a projected manner, the projecting portion of the projection may be arranged to project toward the opening side relative to the linear portion 35. Because the length L2 from the linear portion 35 to the engagement portion 31 in the belt-like base 331 is equal to the length L1 from a content-side end 321A to the engagement portion 31 in the belt-like base 321 (Fig. 4), sealing is not conducted at an area closer to the opening than the linear portion 35. With this arrangement, an area covering to the content-side edge 35A of the linear portion 35 of the seal portion 4 can be securely sealed.

As the seal bars 5 approach each other in this state, one of the seal bars 5 presses the seal base 36 via the base film 24 to form the seal portion 4 in the seal base 36.

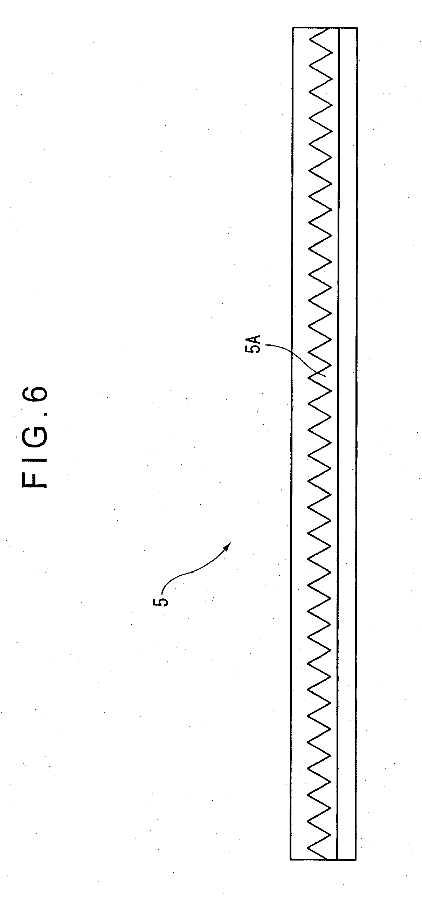

Here, as shown in Fig. 6, the one of the seal bars 5 includes continuous wave-shaped pressing protrusions 5A similar to those of the seal portion 4.

In this manner, by employing the seal bar 5 having the pressing protrusions 5A shaped similarly to the seal portion 4, the continuously wave-shaped seal portion 4 can be easily formed in the embodiment.

Incidentally, the fusing conditions (temperature, pressure, or the like) are suitably determined in accordance with types of resin forming the zipper tape 3 and the base films 24 that form the bag body 2.

Next, an opening state of the zipper-equipped package bag 1 of the embodiment will be described with reference to Figs. 3, 7, and 8.

In the state of Fig. 3, the male member 32 and the female member 33 of the zipper tape 3 are in an engaged state. At a lower side (content side) of the engagement portion 31 in Fig. 3, the surface 36B in side of the engagement portion 31 of the seal base 36 in the belt-like base 331 of the female member 33, which is widened relative to the belt-like base 321 of the male member 32, is sealed on facing inner surface of the bag body 2. Accordingly, air-tightness and water-tightness are secured. A liquid content is not allowed to enter a gap in the engagement portion 31 of the zipper tape 3 during transportation, for example.

In addition, in the zipper-equipped package bag 1 having an arrangement of Fig. 3, the surface 36A of the seal base 36 in opposite side of the engagement portion 31 is not appreciably adhered to facing inner surface of the bag body 2. Accordingly, even when internal pressure is applied to a content-side portion of the bag body 2 while the bag undergoes a retort process or the like, for example, stress concentrates at "X" region in Fig. 3. Thus, even when internal pressure is applied, the surface 36B of the seal base 36 in side of the engagement portion 31 is not peeled away from facing inner surface of the bag body 2, so that leakage of the content is prevented.

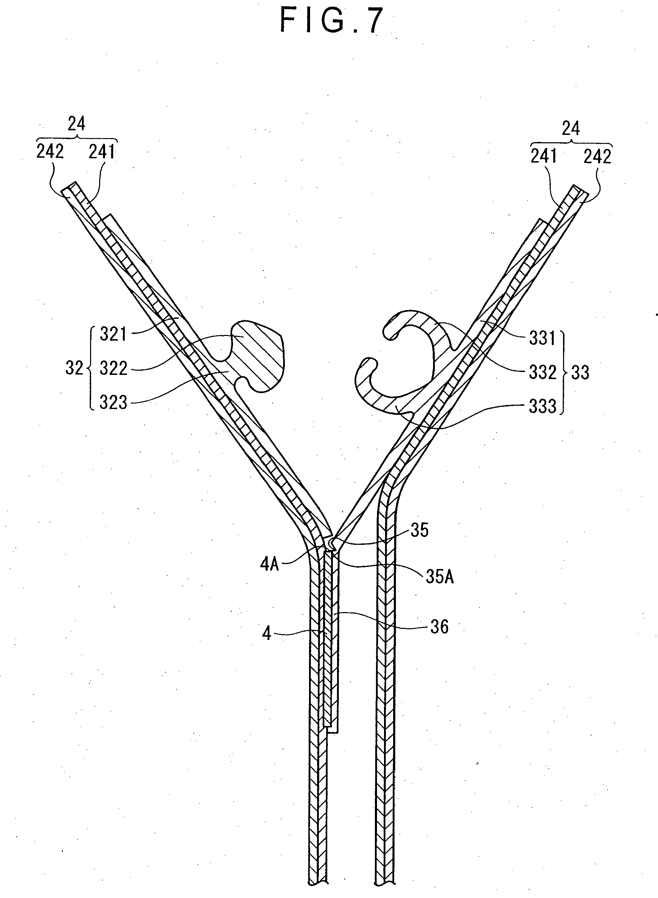

Next, when the content is taken out of the zipper-equipped package bag 1, the opening 23 is cut and the zipper tape 3 is opened to release the engagement of the engagement portion 31. At this time, because the opening-side end 4A of the seal portion 4 abuts to the linear portion 35, as shown in Fig. 7, the bending in an opening direction of the bag body 2 occurs at a position of the linear portion 35, so that force is likely to be applied to the linear portion 35.

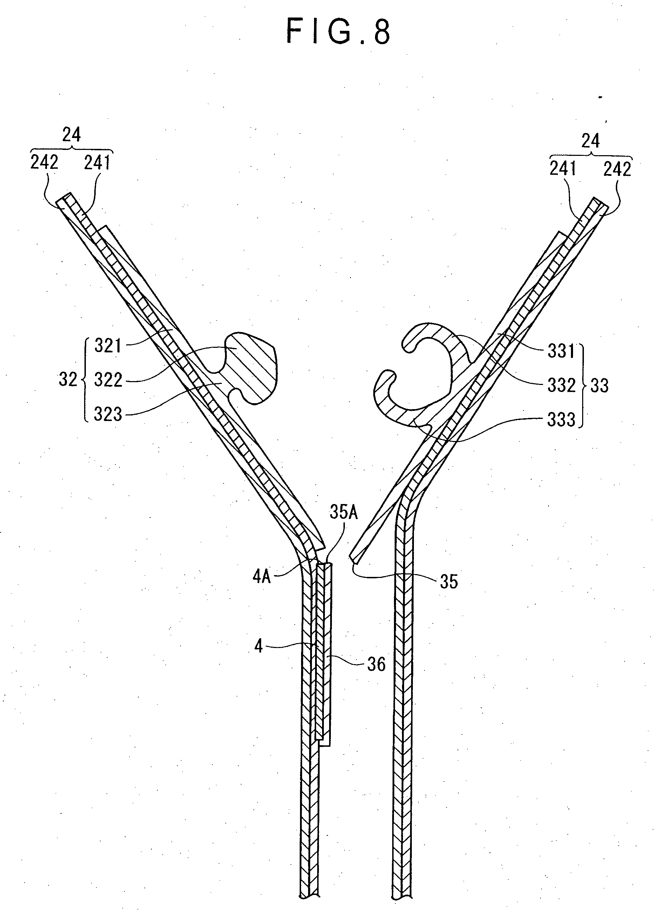

Then, the linear portion 35 is cut by the force that opens the zipper tape 3, and the zipper-equipped package bag 1 is opened (Fig. 8).

To reclose the zipper-equipped package bag 1, the male member 32 and the female member 33 are engaged to form an engagement of the engagement portion 31.

With the zipper-equipped package bag 1 as described above, the following advantages can be attained.
(1) In the zipper-equipped package bag 1, the belt-like base 331 of the female member 33 is widened toward the content side relative to belt-like base 321 of the male member 32 in order to define the seal base 36; the wedge-shaped linear portion 35 is formed adjacent to the opening side of the seal base 36; and the seal portion 4 is formed by sealing the seal base 36 on facing inner surface of the bag body 2. Because the content-side edge 35A of the linear portion 35 abuts to the opening-side end 4A of the seal portion 4 and the linear portion 35 is thinly formed in a wedge shape, when the zipper tape 3 is opened, bending toward the opening direction of the bag body 2 occurs at a position of the linear portion 35, so that force is likely to be applied to the linear portion 35. Thus, the linear portion 35 can be easily cut by the force that opens the zipper tape 3.
(2) The seal portion 4 includes consecutive wave-shaped portions, whose vertexes are positioned adjacent to the linear portion 35. Accordingly, the force that opens the zipper tape 3 concentrates at the vertex (the opening-side end 4A). Because the opening-side end 4A abuts to the content-side edge 35A of the linear portion 35, force is applied also to the linear portion 35, so that the linear portion 35 is easily cut.
(3) Because the length L2 from the linear portion 35 of the belt-like base 331 to the engagement portion 31 is equal to the length L1 from the content-side end 321 A of the belt-like base 321 to the engagement portion 31, the content-side end 321 A of the belt-like base 321 of the male member 32 reaches the linear portion 35 of the facing female member 33. Accordingly, when the seal base 36 is sealed to facing inner surface of the bag body 2, a part of the seal base 36 closer to the opening than the linear portion 35 is not sealed.

Therefore, the opening-side end 4A of the seal portion 4 is securely sealed at an area covering to the linear portion 35, so that the advantage of (2) can be attained.
(4) In the zipper-equipped package bag 1, the belt-like base 331 of the female member 33 is widened toward the content side relative to the belt-like base 321 of the male member 32 in order to define the seal base 36, and the surface 36B of the seal base 36 in side of the engagement portion 31 is sealed on facing surface of the bag body 2, so that air-tightness and water-tightness are secured, thus preventing a liquid content from entering a gap in the engagement portion 31 of the zipper tape 3.
(5) Because the surface 36A of the seal base 36 in opposite side of the engagement portion 31 is not appreciably adhered to facing inner surface of the bag body 2, even when internal pressure is applied to a content-side portion of the bag body 2, the surface 36B of the seal base 36 in side of the engagement portion 31 is not peeled away from facing inner surface of the bag body 2, thus preventing leakage of the content.

Therefore, the zipper-equipped package bag 1 having such an arrangement is excellent in air-tightness and water-tightness; and even when internal pressure is applied to the content-side of the bag body 2, the content is prevented from leaking. Accordingly, this zipper-equipped package bag 1 is employed for packaging goods such as food, medicine, medical goods, and miscellaneous goods, as well as for undergoing a retort process at a high temperature.
(6) Because the male member 32 and the female member 33 are made of polypropylene, heat resistance is enhanced.

### Second Embodiment

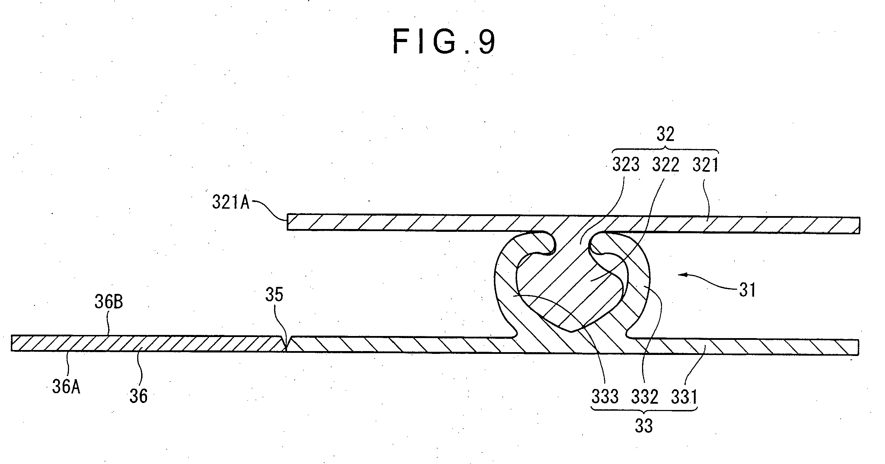

Next, a second embodiment of the invention will be described with reference to Figs. 9 to 11. Since the second embodiment has the same arrangement as the first embodiment except difference in the arrangements of the seal base 36, description thereof will be omitted.

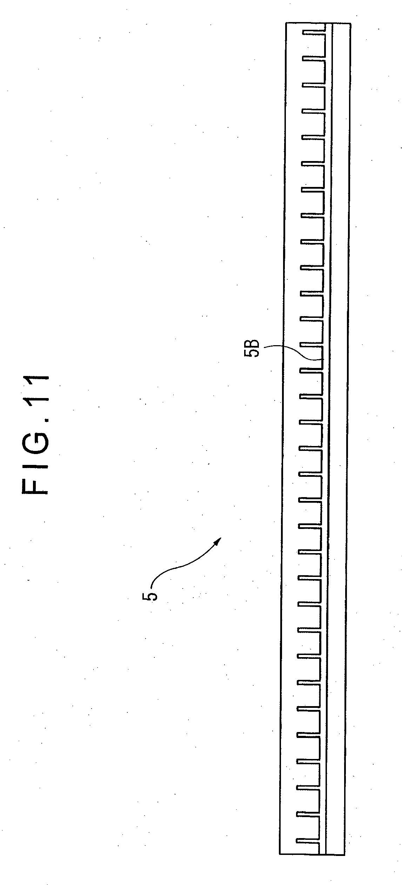

As shown in Fig. 9, in the second embodiment, the seal base 36 is made of a material having a lower fusing point than that of a material used for the belt-like base 331 positioned closer to the opening than the linear portion 35. For example, while random polypropylene (fusing point 135° C) is employed as a material for the seal base 36, homopolypropylene (fusing point 160° C) is employed as a material for the belt-like base 331 positioned closer to the opening than the linear portion 35. Also, in the embodiment, the seal portion 4 is shaped to provide consecutive protrusions as shown in Fig. 11.

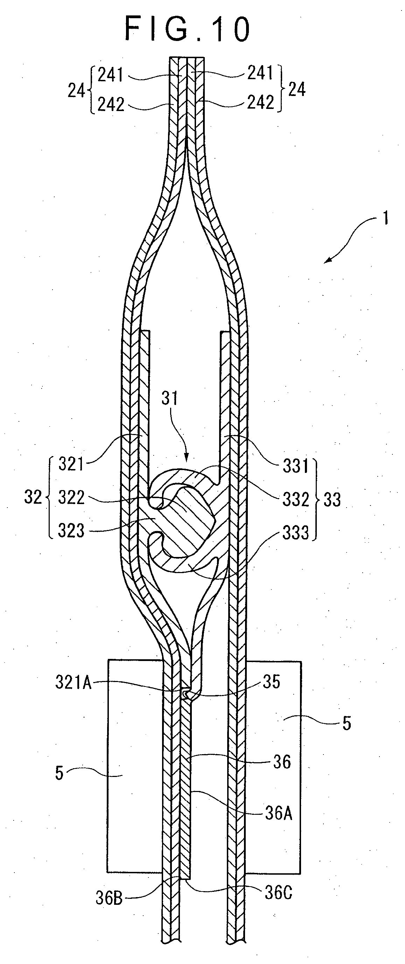

Fig. 10 shows the seal bar 5 sealing the seal base 36 and facing inner surface of the bag body 2. In this case, the sealed area partially includes the seal base 36, the linear portion 35, and the belt-like base 321. The seal temperature at this time may exemplarily be set at 150° C.
With this shaping arrangement, when the zipper tape 3 is opened, force is applied to the portion (the opening-side end 4A) protruding toward the linear portion 35, so that the linear portion 35 abutting to the opening-side end 4A is cut.

With this arrangement of the second embodiment, in addition to the advantages (1) to (6) of the above-described first embodiment, the following advantage can be attained.
(7) Because there is a difference between the fusion points of the seal base 36 and the belt-like base 331 positioned closer to the opening than the linear portion 35, by adjusting the temperature of the seal bar 5, the seal base 36 having a lower fusion point can be sealed alone

In addition, by sealing not only the seal base 36 but also the linear portion 35 and a part of the belt-like base 321 are sealed, an area covering to the linear portion 35 can securely be sealed, thereby achieving an enhanced cutting property of the linear portion 35. Moreover, because the opening-side end 4A of the protrusion, which is the protruding shape of the seal portion 4, is positioned to surpass the linear portion 35, it is not necessary to precisely determine the position of the seal bar 5, thereby omitting possible mistakes and workloads for seal positioning.

### Third Embodiment

Next, a third embodiment of the invention will be described. Since the third embodiment has the same arrangement as the first embodiment except difference in the arrangements of the seal base 36, description thereof will be omitted.

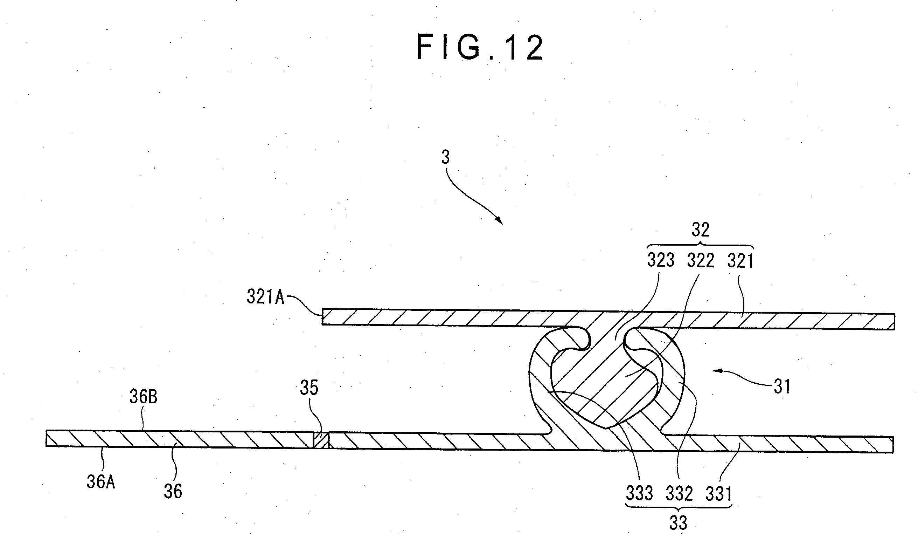

Fig. 12 is a cross-sectional view of the zipper tape 3 according to the third embodiment.

In the third embodiment, a material of the linear portion 35 and a material of the seal base 36 adjacent to the linear portion 35 are formed of different materials having small compatibility.

For example, when polypropylene is employed for the seal base 36, low density polyethylene (LDPE) may be employed for the linear portion 35.

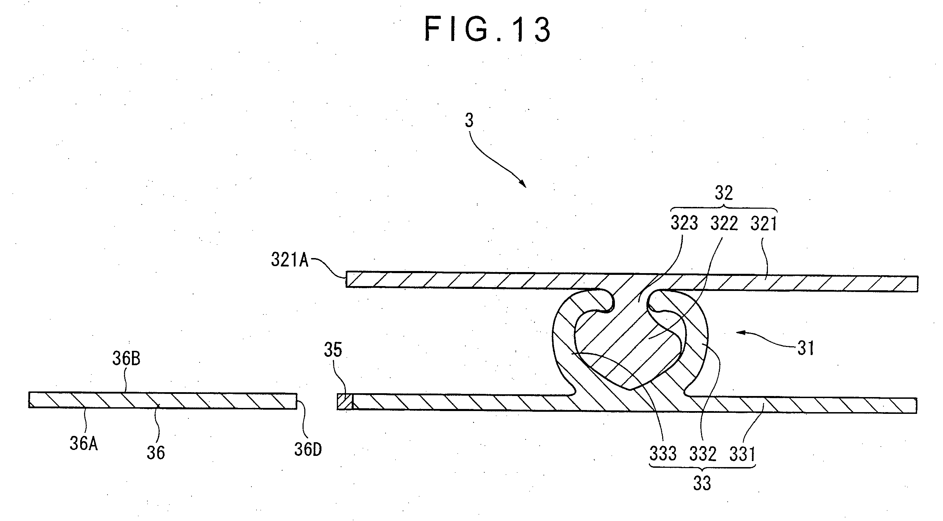

Because the seal shape is the same as the above-described second embodiment (Fig. 11), at the time of opening, the opening force is applied to the opening-side end 4A of the seal portion 4, so that the force is also applied to the linear portion 35 adjacent to the opening-side end 4A. Accordingly, as shown in Fig. 13, cutting occurs at a connecting surface 36D of the linear portion 35 and the seal base 36 that are formed of materials having small compatibility.

With this arrangement of the third embodiment, in addition to the advantages (1) to (6) of the above-described first embodiment, the following advantage can be attained.
(8) Because the material used for the linear portion 35 is arranged to be a material having small compatibility with the material used for the seal base 36, when force is applied to the vicinity of the linear portion 35, an inter-layer peeling is likely to occur at the connecting surface 36D between the linear portion 35 and the neighboring seal base 36. Accordingly, the linear portion 35 can be easily cut by the force that opens the zipper tape 3.

Incidentally, the scope of the invention is not limited to the above-described embodiments, but includes modifications and improvements as long as an object of the invention can be achieved. Also, specific structure, shape, and the like at the time of implementation may be otherwise arranged as long as an object of the invention can be achieved.

In the first and second embodiments set forth above, the linear portion 35 is wedge-shaped. However, the shape of the linear portion 35 is not limited thereto, but may be shaped in a rectangle or a circle as well as in any other shape that allows thinner formation as compared with portions adjacent to the linear portion 35.

In the above-described embodiments, the shape of the seal portion 4 is exemplified by a wave shape or a protruding shape, but is not limited thereto. The seal portion 4 may take any shape as long as a peak point is formed toward the linear portion 35.

In the above-described embodiments, the opening-side end 4A of the seal portion 4 abuts to the content-side edge 35A of the linear portion 35, but the distance between the opening-side end 4A and the content-side edge 35A is only required to be equal to or smaller than 3 mm.

In above-described embodiments, with regard to the male member 32 and the female member 33 of the zipper tape 3, the belt-like base 331 of the female member 33 is formed wider than the belt-like base 321 of the male member 32. However, this is not to limit the scope of the invention, and the belt-like base 321 of the male member 32 may be formed wider than the belt-like base 331 of the female member 33 in order to define the seal base 36 in the belt-like base 321.

In the above-described embodiments, when the zipper tape 3 is attached to the inner surface of the bag body 2, the belt-like bases 321 and 331 of the male member 32 and the female member 33 are directly sealed on the inner surface (the sealant layer 241) of the bag body 2 (except the surface 36A of the seal base 36 in opposite side of the engagement portion 31 in the belt-like base 331 of the female member 33). However, a seal layer formed of sealable resin may exemplarily be provided to the belt-like bases 321 and 331 of the male member 32 and the female member 33. When such a seal layer is provided, the zipper tape 3 is favorably attached to the bag body 2 (however, this seal layer is not required to be provided to the surface 36A of the seal base 36 in opposite side of the engagement portion 31 in the belt-like base 331 of the female member 33, either).

In the above-described embodiments, opening and reclosing are conducted as the substantially arrowhead-shaped head 322 of the male member 32 and the substantially arc-shaped first hook 332 and second hook 333, which form the engagement portion 31, engage or disengage. However, the shape of the engagement portion 31 is not limited thereto. As long as opening and reclosing function is achieved, the head 322 of the male member 32 and the first hook 332 and the second hook 333 of the female member 33 may be formed in any suitable shape or number.

### Examples

Examples and Comparatives will be noted below to further specifically describe the invention, but the scope of the invention is not limited to what are described in Examples and the like.

Measurements were made of: performance evaluation of openability of the linear portion in accordance with a distance between the seal portion and the linear portion, and a shape of the seal portion; and opening strength.

The zipper tape was configured as follows: random polypropylene (fusing point 135° C) was employed for the seal base; homopolypropylene (fusing point 157° C) was employed for the belt-like base closer to the opening than the linear portion; the linear portion was formed 30 µm thick; and a section adjacent to the linear portion was formed 300 µm thick. The base material film 40 was configured as follows: a laminated film of 12µm thick polyethylene terephthalate (PET), 15 µm nylon (Ny); 60 µm thick cast polypropylene film (CPP) was employed to make samples with a zipper-tape-equipped three-side-seal bag-making machine under conditions of Examples 1 to 3 and Comparatives 1 to 4. The bag size of the samples was width 200 mm × height 200 mm.

### Example 1

Distance between the seal portion and the linear portion: 0 mm
Seal bar shape: wave shape (shape of continuous waves, see Fig. 6)

### Example 2

Distance between the seal portion and the linear portion: 2 mm
Seal bar shape: wave shape (shape of continuous waves, see Fig. 6)

### Example 3

Distance between the seal portion and the linear portion: 0 mm
Seal bar shape: protrusion (shape of continuous protrusions, see Fig. 11)

### Comparative 1

Distance between the seal portion and the linear portion: 0 mm
Seal bar shape: straight line

### Comparative 2

Distance between the seal portion and the linear portion: 2 mm
Seal bar shape: straight line

### Comparative 3

Distance between the seal portion and the linear portion: 4 mm
Seal bar shape: straight line

### Comparative 4

Distance between the seal portion and the linear portion: 4 mm
Seal bar shape: wave shape (shape of continuous waves, see Fig. 6)

### Evaluation of Openability after Seal Process

Performance evaluation of openability of the linear portion and opening strength were measured for the samples made under conditions of Examples 1 to 3 and Comparatives 1 to 4.

### Performance evaluation of openability was as follows.

The opening strength was measured according to JIS Z 0238, where the samples were cut into 15 mm and the zipper tape on the opening side was closed to measure the 180 degree peeling strength. A digital force gauge manufactured by IMADA CO., LTD. was employed as the measurement machine.

**Performance Evaluation of Openability**

| Grade: | Meaning |
|---|---|
| A: | easily peelable regardless of seal position |
| B: | easily openable |
| C: | openable though resistant |
| D: | difficult to open due to large resistance |

**Table 1**

| | Openability | Opening Strength |
|---|---|---|
| Example 1 | B | 15 N/15mm |
| Example 2 | B | 15 N/15mm |
| Example 3 | A | 10 N/15mm |
| Comparative 1 | C | 25 N/15mm |
| Comparative 2 | C | 30 N/15mm |
| Comparative 3 | D | - |
| Comparative 4 | C | 25 N/15mm |

From the results of Table 1, it is known that both openability and opening strength were favorable in Examples 1 to 3, and extraordinarily favorable in Example 3 where the seal bar shape was a protrusion.

From Comparatives 1 to 3 where the seal portion was shaped in a straight line, openability was inferior, and strong opening strength was required. Especially in Comparative 3, since the distance between the seal portion and the linear portion was long (4 mm), the zipper tape could not be opened. In Comparative 4, whereas the seal portion was a wave shape, since the distance between the seal portion and the linear portion was long (4 mm), openability was inferior, and strong opening strength was required.

### Industrial Applicability

The invention can be utilized for packaging various goods such as food, medicine, medical goods, and miscellaneous goods. In addition, being adaptable to retort sterilization process at a high temperature, the invention can be widely utilized for a zipper-equipped package bag for packaging retort food.

## Claims

1. A package bag having a zipper tape, the zipper tape being attached to mutually facing inner surfaces of a bag body, the zipper tape comprising:
an engagement portion formed when a pair of male member (32) and a female member (33) are engaged; and
belt-like bases (321, 331) respectively continued to the male member and the female member, wherein
one of the belt-like bases (331) is widened toward a content side relative to the other of the belt-like bases in order to define a seal base (36),
a first surface (36B) of the seal base (36) in side of the engagement portion (31) is attached to one of the mutually facing inner surfaces of the bag body,
a second surface (36A) of the seal base (36) in opposite side of the engagement portion (31) is not appreciably attached to the other of the mutually facing inner surfaces of the bag body,
the seal base includes a linear portion (35) provided substantially in parallel to a longitudinal direction of the engagement portion and adapted to be cut,
a content-side edge (35A) of the linear portion (35) is abutted to or proximate to an opening-side end (4A) of a seal portion (4) provided to a content side of the linear portion, and
**characterised in that**
a dimension between the seal portion (4) and the linear portion (35) changes along a longitudinal direction of the linear portion.

2. The package bag having the zipper tape according to claim 1, wherein
the distance between the content-side edge (35A) of the linear portion (35) and the opening side end (4A) of the seal portion is 3 mm or smaller.

3. The package bag having the zipper tape according to claim 1 or 2, wherein
the seal portion (4) is shaped to provide one or more protrusions or one or more wave-shaped portions.

4. The package bag having the zipper tape according to any one of claims 1 to 3, wherein
a distance between the engagement portion (31) and the linear portion (35) in the one of the belt-like bases that includes the seal base is the same as a distance between the engagement portion (31) and a content-side end of the other of the belt-like bases in the other of the belt-like bases.

5. The package bag having the zipper tape according to any one of claims 1 to 4, wherein
a fusing point of the seal portion is lower than a fusing point of the seal base except the seal portion.

6. The package bag having the zipper tape according to any one of claims 1 to 5, wherein
the linear portion is thinner than a portion adjacent to the linear portion.

7. The package bag having the zipper tape according to any one of claims 1 to 5, wherein
the linear portion is formed of a resin that has a small compatibility with the seal base except the linear portion.

## Patentansprüche

1. Verpackungsbeutel mit einem Reißverschlussband, wobei das Reißverschlussband an einander zugewandten inneren Oberflächen eines Beutelkörpers befestigt ist, wobei das Reißverschlussband Folgendes umfasst:
einen Eingriffsabschnitt, der gebildet wird, wenn sich ein Paar aus einem Einsteckglied (32) und einem Aufnahmeglied (33) in Eingriff befinden; und
gurtartige Basisteile (321, 331), die jeweils zu dem Einsteckelement bzw. dem Aufnahmeelement fortgesetzt sind, wobei
eines der gurtartigen Basisteile (331) zu einer Inhaltsseite hin relativ zu dem anderen der gurtartigen Basisteile verbreitert ist, um ein Dichtungsbasisteil (36) zu definieren.
eine erste Oberfläche (36B) des Dichtungsbasisteils (36) innerhalb von dem Eingriffsabschnitt (31) an einer der einander zugewandten inneren Oberflächen des Beutelkörpers befestigt ist,
eine zweite Oberfläche (36A) des Dichtungsbasisteils (36) in der gegenüberliegenden Seite des Eingriffsabschnitts (31) nicht merklich an der anderen der einander zugewandten inneren Oberflächen des Beutelkörpers befestigt ist,
die Dichtungsbasis einen linearen Abschnitt (35) umfasst, der im Wesentlichen parallel zu einer Längsrichtung des Eingriffsabschnitts vorgesehen ist und dazu angepasst ist,
geschnitten zu werden,
ein inhaltsseitiger Rand (35A) des linearen Abschnitts (35) an einem öffnungsseitigen Ende (4A) eines an einer Inhaltsseite des linearen Abschnitts vorgesehenen Dichtungsabschnitts (4) anstößt oder sich proximal dazu befindet, und **dadurch gekennzeichnet, dass**
sich ein Maß zwischen dem Dichtungsabschnitt (4) und dem linearen Abschnitt (35) entlang einer Längsrichtung des linearen Abschnitts verändert.

2. Verpackungsbeutel mit dem Reißverschlussband nach Anspruch 1, wobei der Abstand zwischen dem inhaltsseitigen Rand (35A) des linearen Abschnitts (35) und dem öffnungsseitigen Ende (4A) des Dichtungsabschnitts 3 mm oder weniger beträgt.

3. Verpackungsbeutel mit dem Reißverschlussband nach Anspruch 1 oder 2, wobeider Dichtungsabschnitt (4) dazu geformt ist, einen oder mehrere Vorsprünge oder einen oder mehrere wellenförmige Abschnitte vorzusehen.

4. Verpackungsbeutel mit dem Reißverschlussband nach einem der Ansprüche 1 bis 3, wobei ein Abstand zwischen dem Eingriffsabschnitt (31) und dem linearen Abschnitt (35) in dem einen der gurtartigen Basisteile, das das Dichtungsbasisteil umfasst, gleich einem Abstand zwischen dem Eingriffsabschnitt (31) und einem inhaltsseitigen Ende des anderen der gurtartigen Basisteile in dem anderen der gurtartigen Basisteile ist.

5. Verpackungsbeutel mit dem Reißverschlussband nach einem der Ansprüche 1 bis 4, wobei ein Schmelzpunkt des Dichtungsabschnitts niedriger ist als ein Schmelzpunkt der Dichtungsbasis außer dem Dichtungsabschnitt.

6. Verpackungsbeutel mit dem Reißverschlussband nach einem der Ansprüche 1 bis 5, wobei der lineare Abschnitt dünner ist als ein dem linearen Abschnitt benachbarter Abschnitt.

7. Verpackungsbeutel mit dem Reißverschlussband nach einem der Ansprüche 1 bis 5, wobei der lineare Abschnitt aus einem Harz gebildet ist, das eine kleine Kompatibilität mit dem Basisteil außer dem linearen Abschnitt aufweist.

## Revendications

1. Sac d'emballage doté d'une bande de fermeture à glissière, cette bande de fermeture à glissière étant fixée sur des surfaces internes du corps du sac qui sont tournées l'une vers l'autre, et la bande de fermeture à glissière comprenant:
une partie de mise en prise qui est formée lorsqu'un élément mâle (32) et un élément femelle (33) se mettent en prise l'un avec l'autre; et
des bases semblables à des sangles (321, 331) qui se prolongent respectivement jusqu'à l'élément mâle et l'élément femelle, **caractérisé en ce que**
la première des bases semblables à des sangles (331) est élargie, vers un côté tourné sur le contenu, par rapport à la deuxième des bases semblables à des sangles, afin de définir une base d'étanchéité (36),
une première surface (36B) de la base d'étanchéité (36) sur le côté de la partie de mise en prise (31) est fixée à la première des surfaces internes du corps du sac qui sont tournées l'une vers l'autre,
une deuxième surface (36A) de la base d'étanchéité (36) sur le côté opposé de la partie de mise en prise (31) n'est pas fixée sensiblement à la deuxième des surfaces internes du corps du sac qui sont tournées l'une vers l'autre,
la base d'étanchéité comprend une partie linéaire (35) prévue de manière essentiellement parallèle au sens longitudinal de la partie de mise en prise, et adaptée de manière à être découpée,
un bord (35A) de la partie linéaire (35) sur le côté tourné sur le contenu est contigu ou proche de l'extrémité côté ouverture (4A) d'une partie assurant l'étanchéité (4) prévue sur un côté tourné sur le contenu de la partie linéaire, et
**caractérisé en ce que**
une dimension entre la partie assurant l'étanchéité (4) et la partie linéaire (35) varie dans un sens longitudinal de la partie linéaire.

2. Sac d'emballage doté de la bande de fermeture à glissière selon la revendication 1, **caractérisé en ce que**
la distance entre le bord (35A) de la partie linéaire (35) sur le côté tourné sur le contenu et l'extrémité côté ouverture (4A) de la partie assurant l'étanchéité est égale ou inférieure à 3 mm.

3. Sac d'emballage doté de la bande de fermeture à glissière selon la revendication 1 ou 2, **caractérisé en ce que**
la forme de la partie assurant l'étanchéité (4) est telle qu'elle prévoit une ou plusieurs protubérances ou une ou plusieurs parties ondulées.

4. Sac d'emballage doté de la bande de fermeture à glissière selon l'une quelconque des revendications 1 à 3, **caractérisé en ce que**
la distance entre la partie de mise en prise (31) et la partie linéaire (35) dans la première des bases semblables à des sangles qui comprend la base d'étanchéité est égale à la distance entre la partie de mise en prise (31) et l'extrémité d'un côté tourné sur le contenu dans la deuxième des bases semblables à des sangles.

5. Sac d'emballage doté de la bande de fermeture à glissière selon l'une quelconque des revendications 1 à 4, **caractérisé en ce que**
le point de fusion de la partie assurant l'étanchéité est inférieur au point de fusion de la base d'étanchéité sauf pour la partie sssurant l'étanchéité.

6. Sac d'emballage doté de la bande de fermeture à glissière selon l'une quelconque des revendications 1 à 5, **caractérisé en ce que**
la partie linéaire est plus mince qu'une partie proche de la partie linéaire.

7. Sac d'emballage doté de la bande de fermeture à glissière selon l'une quelconque des revendications 1 à 5, **caractérisé en ce que**
la partie linéaire est constituée d'une résine qui est peu compatible avec la base d'étanchéité sauf pour la partie linéaire.
